# EUROPEAN PATENT SPECIFICATION

(11) **EP 3 410 868 B1**
(45) Date of publication and mention of the grant of the patent: **15.09.2021**
(21) Application number: 17701303.4
(22) Date of filing: 19.01.2017
(51) Int. Cl.: A23D 9/007, C11C 3/06, A23D 7/01, A23D 9/013

(54) **METHOD FOR PREPARING A SELF-EMULSIFYING FAT COMPOSITION**
VERFAHREN ZUR HERSTELLUNG EINER SELBSTEMULGIERENDE FETTZUSAMMENSETZUNG
PROCÉDÉ DE FABRICATION D'UNE COMPOSITION DE GRAISSE AUTO-ÉMULSIFIANTE

(30) Priority: 01.02.2016 EP 16275016
(43) Date of publication of application: 12.12.2018
(73) Proprietor: Bunge Loders Croklaan B.V., 1521 AZ Wormerveer (NL)
(72) Inventor: MA, Jun, 1521 AZ Wormerveer (NL); VAN ROOIJEN, Christiaan, 1521 AZ Wormerveer (NL); SMIT, Helen Cornelia, 1521 AZ Wormerveer (NL)
(74) Representative: Potter Clarkson
(86) International application number: PCT/EP2017/051053
(87) International publication number: WO 2017/133895

(56) References cited:
- EP-A1- 1 057 887
- US-A- 4 656 045
- US-A1- 2007 148 313
- OKIY D. ET AL.: "The Physical Properties of Modified Palm Oil", J. SCIENCE FOOD AND AGRICULTURE, vol. 29, no. 12, 31 December 1978 (1978-12-31), pages 1061-1068, XP002759797,

## Description

This invention relates to a method of preparing a self-emulsifying fat composition.

Fats are often used in edible products including, for example, margarine, bakery fat, laminating (i.e., puff pastry) fat and cake fat. These fats sometimes contain an emulsifier to aid the formation of a uniform dispersion where the product is an emulsion and/or to assist with dispersion of the fat when it is used.

Fat compositions which are used in baking and which may cause a layering effect in products after baking are known as laminating fats. For example, the desirable effect of layering that is achieved in bakery products such as puff pastry can be achieved using laminating fats. Puff pastry is a light, flaky pastry made from dough which contains layers of a fat such as butter or a vegetable fat. The layers of fat are usually obtained by spreading the fat on the dough, folding the dough, and rolling it out. The layered structure of the puff pastry is due at least in part to the layers of the fat. Products in which this type of structure is desirable include croissants, Danish pastries and pies. The fats are predominantly made up of triglycerides.

Glycerides are present in many food products and are the main components of edible fats and oils. Glycerides may be in the form of mono-, di- or tri- glycerides having one, two or three fatty acid acyl groups, respectively, bonded to a glycerol backbone. Triglycerides are the predominant type of glyceride in edible fats and oils.

EP-A-2194792 describes compositions comprising: (A) from about 20 % to about 80 % by weight of an interesterified palm oil olein; (B) from about 5 % to about 25 % by weight of a liquid oil; (C) from about 15 to about 75 % by weight of a fat selected from the group consisting of palm oil stearins, interesterified palm oil stearins, palm oil oleins, fully hydrogenated oils and mixtures thereof. The compositions may be used as a bakery fat, particularly a laminating fat for products such as puff pastry.

US2007/0148313 A1 discloses a glyceride emulsifier having an elevated diglyceride portion that is especially useful in preparing puff pastry products. The high diglyceride emulsifier is obtained by the interesterification or glycerolysis of triglycerides with glycerol.

There is a need for improved emulsifiers for fats that can impart beneficial properties to the fats themselves, to processes in which the fats are used and to products made from the fats.

According to the invention, there is provided a method of preparing a self-emulsifying fat composition as defined in Claim 1.

Also described herein is a method comprising the steps of:
a) providing a fat composition comprising triglycerides (TG);
b) separating a portion from the fat composition;
c) reacting the separated portion of the fat composition with glycerol to obtain a reacted portion comprising monoglycerides (MG) and diglycerides (DG); and
d) reintroducing at least part of the reacted portion into the fat composition to obtain a self-emulsifying fat composition comprising predetermined amounts of MG and DG.

Also described herein is a self-emulsifying fat composition obtainable by the method of the invention.

Described herein is a method of preparing a fat composition, comprising the steps of:
a) providing a fat composition comprising triglycerides (TG);
b) separating a portion from the fat composition;
c) reacting the separated portion of the fat composition with glycerol to obtain a reacted portion comprising monoglycerides (MG) and diglycerides (DG); and
d) reintroducing at least part of the reacted portion into the fat composition to obtain a fat composition comprising predetermined amounts of MG and DG,
wherein the fat composition preferably has emulsifying properties.

The term "self-emulsifying fat", as used herein, refers to a fat that contains MG and/or DG capable of acting as emulsifiers for the fat and that can be derived from the fat itself. It has surprisingly been found that there are advantages in using as emulsifier for a fat a composition comprising MG and DG that has a fatty acid profile similar to that of the fat itself.

The term "fat" refers to glyceride fats and oils containing fatty acid acyl groups and does not imply any particular melting point. Fats predominantly comprise triglycerides (TG). The fat may typically comprise some solid and liquid components at 20 °C.

The term "fatty acid", as used herein, refers to straight chain saturated or unsaturated (including mono- and poly- unsaturated) carboxylic acids having from 12 to 24 carbon atoms. A fatty acid having n carbon atoms and x double bonds may be denoted Cn:x. For example, lauric acid may be denoted C12:0 and oleic acid may be denoted C18:1. Percentages of fatty acids in compositions referred to herein include acyl groups in tri-, di- and mono- glycerides present in the glycerides as is customary terminology in the art.

The fat composition comprising triglycerides that is provided in a) may be a single fat or a mixture of two or more different fats. The fat or fats may be interesterified either individually or as a blend. The fat or fats may be non-interesterified. The fat composition as herein described typically comprises at least 85 % by weight triglycerides. In accordance with the method of the present invention, the fat composition comprises at least 95 % by weight triglycerides, such as at least 96 %, at least 97 %, or at least 98 % triglycerides, based on the weight of the fat composition. Suitable fats include palm oil and its fractions, palm kernel oil and its fractions, and mixtures thereof, optionally interesterified. Preferred fats include palm stearin and palm kernel olein, and mixtures thereof, optionally interesterified, such as: an interesterified mixture of palm stearin and palm kernel oil; and (non-interesterified) palm stearin.

The fat composition preferably comprises C16:0 and C18:1 fatty acids as acyl groups in glycerides, each in an amount of greater than 5 % by weight and may comprise C12:0, C14:0, C16:0 and C18:1 fatty acids as acyl groups in glycerides each in an amount of greater than 5 % by weight.

The fat may be separated in b) by any conventional method of removing a portion of a substance. The chemical composition of the portion of the fat composition that is separated will be the same as the chemical composition of the original fat composition from which it is separated. For example, the separated portion will have the same fatty acid profile as the fat composition. Thus, the composition of the portion that is separated is unchanged relative to the fat composition.

The portion of the fat composition that is separated in b) in the method as herein described represents from 0.5 to 20 % by weight of the fat composition. In accordance with the method of the present invention, the portion of the fat composition that is separated in step b) represents from 0.5 to 10 % by weight of the fat composition, preferably from 0.5 to 5 % by weight.

Step c) involves the reaction of the separated portion of the fat composition with glycerol. During this reaction, exchange of fatty acyl groups takes place between triglycerides (TG) in the fat composition and the glycerol (also referred to herein as glycerin) to form a product having increased levels of MG and DG. Typically, the molar ratio of the fat composition to glycerol in the reaction is in the range of from 2:1 to 1:2, more preferably from 3:2 to 2:3, such as from 1.2:1 to 1:1.2. The reaction may be catalyzed, for example by a lipase. Suitable lipases include, for example, fungal lipases such as the lipase from *Candida antarctica* B, for example Novozym® 435 (available from Novozymes A/S, Denmark). The reaction is preferably carried out at temperatures in the region of from 15 to 75 °C, more preferably from 55 to 70 °C. The reaction is stopped when the amounts of MG and DG have reached the desired levels, such as 10 to 60 % MG and 15 to 70 % DG, more preferably 20 to 50 % MG and 30 to 60 % DG, by weight of the reacted portion, with the balance of the glycerides being TG. The reaction generally takes from 6 to 48 hours.

Preferably, after step c), the MG and DG combined amount to at least 25 % by weight of the reacted portion, more preferably at least 50 % by weight, such as from 60 to 90 % by weight.

When conducting the method of the present invention, the amounts of MG, DG and TG in the compositions and portion may be determined by techniques known to those skilled in the art, such as the method described in the examples below.

After step c) and prior to step d), the reacted portion is preferably subjected to treatment that increases its purity in glycerides, for example by removal of free fatty acids. Preferred treatment involves refining, for example by bleaching and deodorizing, more preferably at a temperature of from 150 to 200 °C.

Mixing of the reacted portion into the fat composition preferably takes place in d) to form a homogeneous mixture.

In step d), the reacted portion, optionally after treatment to increase its purity in glycerides, is added back into the fat composition. Any method can be used that mixes the reacted portion with the fat composition. If one or both of the reacted portion and the fat composition contain substantial amounts of solids at ambient temperature, the two are preferably mixed at an elevated temperature at which they are both liquid or substantially liquid (e.g., having a solid fat content of 10 % or less determined by NMR on the respective composition stabilised for 16 hours at 0 °C).

The fatty acid composition of the acyl groups in the glycerides (MG, DG and TG) in the reacted portion will depend on the fatty acid composition of the acyl groups in the fat composition. The fat composition and the reacted portion preferably have similar fatty acid profiles. In accordance with the method of the present invention, the weight of fatty acids that are present in the fat composition in an amount of greater than 5 % by weight of the composition will vary in the reacted portion by 50 % or less; preferably, by 33 % or less, more preferably 25 % or less. For example, the ratio of the weight % for the C12:0 content in the fat composition to the weight % for the C12:0 content in the reacted portion may be in the range of 1.5:1 to 1:1.5, more preferably 1.33:1 to 1:1.33, even more preferably 1.25:1 to 1:1.25. Preferably, for each of the fatty acids C12:0, C14:0, C16:0 and C18:1, the weight ratio of the content in the fat composition to the content in the reacted portion is in the range of 1.5:1 to 1:1.5, more preferably 1.33:1 to 1:1.33, even more preferably 1.25:1 to 1:1.25. For example, if the C16:0 content of the fat composition is 16 % by weight, the C16:0 content of the reacted portion is preferably in the range 11-24 % by weight (i.e., varying by 50 % either side of 16 %). The fatty acid profile (i.e., composition) of the fat composition and the reacted portion may be determined, for example, by fatty acid methyl ester analysis (FAME) using gas chromatography according to ISO 15304.

Preferably, the self-emulsifying fat composition obtained in accordance with the method of the present invention has a weight ratio of DG to MG of at least 4:1, more preferably from 4:1 to 10:1.

Prior to step d), the method preferably comprises the steps of determining the amounts of MG and DG in the reacted portion and the amounts of MG and DG in the fat composition. Preferably, the amount of the reacted portion to be reintroduced into the fat composition is adjusted based on the determined amounts to obtain the predetermined amounts of MG and DG in the self-emulsifying fat composition. The predetermined amounts are preferably an amount of MG and DG combined in the self-emulsifying fat composition of at least 2.5 % by weight, such as 2.5 % to 30 % by weight, more preferably from 2.5 % to 20 % by weight, even more preferably from 2.5 % to 10 % by weight. The amount of MG in the self-emulsifying fat composition is typically at least 0.5 % by weight, such as from 0.5 to 10 % by weight, preferably 0.5 to 4 % by weight, more preferably from 0.5 to 3 % by weight. Preferably, the amount of DG in the self-emulsifying fat is at least 2 % by weight, such as from 3 to 15 % by weight, more preferably from 4 to 10 % by weight, even more preferably from 5 to 8 % by weight.

It is preferred that no additional emulsifiers are added to the self-emulsifying fat composition. The self-emulsifying fat composition is therefore preferably free of added emulsifiers other than those from the reacted portion i.e., the emulsifier in the self-emulsifying fat composition consists essentially of, or consists of, the reacted portion, optionally after refining. Thus, the self-emulsifying fat composition preferably comprises MG and DG as the sole emulsifiers. The self-emulsifying fat composition is thus typically free of non-glyceride emulsifiers, such as lecithin.

In one aspect, the method as herein described comprises the steps of:
a) providing a fat composition comprising at least 95 % by weight triglycerides;
b) separating a portion from the fat composition;
c) reacting the separated portion with glycerol to obtain a reacted portion comprising monoglycerides (MG) and diglycerides (DG), wherein the weight percentages of fatty acids that are present in the fat composition in an amount of greater than 5 % by weight of the composition will vary in the reacted portion by 50 % or less; and
d) mixing at least part of the reacted portion with the fat composition to obtain a self-emulsifying fat composition comprising from 0.5 to 10 % by weight MG and from 2 to 15 % by weight DG.

Also described herein is a self-emulsifying fat composition obtainable by the method of the invention, and preferably obtained by the method of the invention.

The weight ratio of DG to MG in the self-emulsifying fat composition obtained in accordance with the method of the present invention is preferably from 4:1 to 10:1.

Preferably, the amount of MG and DG combined in the self-emulsifying fat composition is at least 2.5 % by weight, such as 2.5 % to 30 % by weight, more preferably from 2.5 % to 20 % by weight, even more preferably from 2.5 % to 10 % by weight. The amount of MG in the self-emulsifying fat composition is typically at least 0.5 % by weight, such as from 0.5 to 10 % by weight, preferably 0.5 to 4 % by weight, more preferably from 0.5 to 3 % by weight. Preferably, the amount of DG in the self-emulsifying fat composition is at least 2 % by weight, such as from 3 to 15 % by weight, more preferably from 4 to 10 % by weight, even more preferably from 5 to 8 % by weight.

The self-emulsifying fat composition prepared in accordance with the method of the present invention is typically suitable for use in the preparation of a margarine, bakery fat, puff pastry (i.e., laminating) fat or cake fat. As such, also described herein is the use of the self-emulsifying fat composition prepared in accordance with the claimed method in the preparation of a margarine, bakery fat, puff pastry (i.e., laminating) fat or cake fat and the use of the self-emulsifying fat composition in the manufacture of a dough or a bakery product.

The self-emulsifying fat composition obtained in accordance with the method of the present invention is preferably used as a blend with one or more other fats and oils when used as the hardstock in a margarine, bakery fat, puff pastry (i.e., laminating) fat or cake fat. The one or more other fats and oils are preferably one or more liquid oils. The weight ratio of the self-emulsifying fat composition obtained in accordance with the claimed method to the one or more other fats and oils is preferably in the range from 10:1 to 1:10, more preferably from 5:1 to 1:5, such as from 2:1 to 1:2. Suitable other fats and oils for blending with the self-emulsifying fat composition include, for example, rapeseed oil, sunflower oil, soybean oil, canola oil, coconut oil, corn oil, cottonseed oil, flaxseed oil, palm oil, palm kernel oil, peanut oil, safflower oil, sesame oil, and shea butter, and fractions thereof.

Margarines may be formed by mixing the self-emulsifying fat composition obtained in accordance with the method of the present invention with an aqueous phase to form a water-in-oil emulsion. Preferably, no additional emulsifier is required. The amounts of fat and aqueous phase typically range from 10-90 % by weight fat and 90-10 % by weight aqueous phase, such as from 20-80 % by weight fat and 80-20 % by weight aqueous phase or from 30-70 % by weight fat and 70-30 % by weight aqueous phase. Further components of margarines include one or more of colouring agents (such as beta-carotene), flavouring agents (for example, salt and/or citric acid) and preservatives (e.g., potassium sorbate); typically, these components are present in an amount of less than 5 % (such as 0.1 to 3 %) by weight of the margarine. The preparation of margarines from a vegetable fat and an aqueous phase is well-known to those skilled in the art.

Margarines typically comprise from about 80 to 90 % by weight fat.

The margarines may be packaged, for example in tubs or wrappers.

The self-emulsifying fat compositions obtained in accordance the method of the present invention are also typically suitable for use as a bakery fat and may be used as bakery fats. The self-emulsifying fat compositions may be used as bakery fats in the form of shortening. Shortening typically comprises the fat blend in plastified form, made plastic by mechanical treatment and/or by the presence of the emulsifier.

Self-emulsifying fat compositions obtained in accordance with the method of the present invention may be used in the production of bakery products. The bakery products may have a laminated structure. For example, the fat blends may be used (or may be suitable for use) as laminating fats, for instance for puff pastry, pies or croissants.

Self-emulsifying fat compositions obtained in accordance with the method of the present invention, in the form of margarine, bakery fat or puff pastry (i.e., laminating) fat may be used to form a dough. The dough comprises at least flour and water and preferably comprises flour in an amount of from 30 to 60 % by weight, water in an amount of from 10 to 40% by weight and the margarine, bakery fat or puff pastry (i.e., laminating) fat comprising the self-emulsifying fat compositions obtained in accordance with the claimed method in an amount of from 10 to 50% by weight based on the weight of the dough. Optionally, one or more further ingredients such as salt and flour modifier may be included in the dough. Bakery products are made from dough. The dough preferably has a laminated structure. The bakery products include, for example, puff pastry, croissants, Danish pastries and pies.

Bakery products may comprise the self-emulsifying fat compositions obtained in accordance with the method of the present invention, preferably as a laminating fat. The dough that is used to produce the bakery product may comprise the self-emulsifying fat composition in the form of bakery fat, margarine or laminating fat. A laminated dough may be prepared, for instance, by a method that comprises applying the self-emulsifying fat composition to a plurality of layers of the dough to form a product in which layers of dough alternate with layers of the self-emulsifying fat composition obtained in accordance with the method of the present invention. Typically, the method of preparing laminated dough comprises applying the self-emulsifying fat composition to the dough, folding the dough and rolling the folded dough.

Doughs comprising the self-emulsifying fat compositions, as a margarine, laminating fat and/or as a bakery fat, may be refrigerated, frozen or otherwise stored prior to use. The frozen dough may be packaged and sold to the consumer.

In order to form a bakery product, the dough is baked, preferably in an oven. Suitable times and temperatures for baking specific bakery products will be well-known to those skilled in the art.

Cake fat may be used to form a batter that can be baked into a cake. Cake batters typically comprise sugar, flour, milk and eggs.

Cakes made using the self-emulsifying fat composition obtained in accordance with the method of the present invention have been found to have improved organoleptic properties and can be made by improved processes. Similarly, puff pastry produced using the self-emulsifying fat composition obtained in accordance with the claimed method showed reduced shrink and improved processing.

Also described herein is the use of the self-emulsifying fat composition obtained in accordance with the method of the present invention in the preparation of cakes with improved organoleptic properties or in the preparation of puff pastry with reduced shrink. In both cases, the processing may be improved.

The listing or discussion of an apparently prior-published document in this specification should not necessarily be taken as an acknowledgement that the document is part of the state of the art or is common general knowledge.

Preferences and options for a given aspect, embodiment, feature or parameter of the invention should, unless the context indicates otherwise, be regarded as having been disclosed in combination with any and all preferences and options for all other aspects, embodiments, features and parameters of the invention.

The following non-limiting examples illustrate the invention and do not limit its scope in any way. In the examples and throughout this specification, all percentages, parts and ratios are by weight unless indicated otherwise.

### Examples

The examples include reference to the figures in which:
Figure 1 shows cake 1 made with a reference fat containing a commercial emulsifier;
Figure 2 shows cake 2 made with a self-emulsifying fat obtained in accordance with the method of the present invention;
Figures 3A and 3B show pastry 1 made with a reference fat containing a commercial emulsifier; and
Figures 4A and 4B show pastry 2 made with a self-emulsifying fat obtained in accordance with the method of the present invention.

### Quantification of triglycerides (TG), diglycerides (DG) and monoglycerides (MG)

The oil sample is dissolved in dichloromethane and separated using a Waters Alliance HPLC equipped with an Econosphere Silica column. The TG, DG and MG fractions are collected. For quantification, the solvent of the fractions is evaporated and the residue is dissolved in an exact amount of THF. The fractions TG, DG and MG dissolved in THF are subsequently analyzed on a Shimadzu HPLC system equipped with a set of PLGel columns and refractive index (RI) detection. The peak areas of the analysis of the fractions are summarized and the relative content of the fractions is calculated by 100 % normalization based on equal and linear response for each fraction.

### Example 1

One portion of fat (4%, w/w) was removed from an interesterified fat (palm stearin and palm kernel oil). The removed portion of fat was esterified with glycerin (ratio of one mole of glycerin to one mole of fat) in the presence of immobilized lipase originating from *Candida antarctica* B (Novozym® 435). When the reaction was completed, after approximatively 24 hours, this portion was filtered. The portion consisted of monoglycerides and diglycerides having the following composition, w/w:

| | |
|---|---|
| Monoglyceride | 34% |
| Diglyceride | 44% |
| Triglyceride | 22% |

Then this portion comprising monoglycerides and diglycerides was bleached and deodorized by low temperature (mild refining). The portion was reintroduced into the initial interesterified fat at the same percentage (4%, w/w) to obtain a self-emulsifying fat composition. This self-emulsifying fat composition consisted of monoglycerides (MG) and diglycerides (DG) from the same origin with a similar fatty acid composition and, taking account of the MG and DG originally present in the interesterified fat, had the following composition, w/w:

| | |
|---|---|
| Monoglyceride | 1.2% |
| Diglyceride | 6% |
| Triglyceride | 92.8% |

The fatty acid composition of this self-emulsifying fat composition is as follows:

| | |
|---|---|
| C12:0% | 16.5% |
| C14:0% | 6.5% |
| C16:0% | 42.6% |
| C18:0% | 4.2% |
| C18:1% | 22.4% |
| C18:2% | 4.6% |
| C18:3% | 0.1% |

In order to compare the results, we used one commercial emulsifier Palsgaard® 1388 (available from Palsgaard A/S, Denmark) in the reference composition. Palsgaard® 1388 has the following composition, w/w:

| | |
|---|---|
| Monoglyceride | 55% |
| Diglyceride | 38% |
| Triglyceride | 7% |

The fatty acid composition of the monoglyceride and diglyceride components of the self-emulsifying fat composition and Palsgaard® 1388 were respectively determined. The results are shown in the following table:

| | Palsgaard® 1388 monoglyceride | Self-emulsifying fat composition monoglyceride | Palsgaard® 1388 diglyceride | Self-emulsifying fat composition diglyceride |
|---|---|---|---|---|
| C12:0% | 0.2% | 20.7% | 0.1% | 15.7% |
| C14:0% | 5.1% | 7.7% | 5.4% | 6.7% |
| C16:0% | 4.6% | 38.6% | 4.6% | 46.6% |
| C18:0% | 4.4% | 4.1% | 3.7% | 3.3% |
| C18:1% | 73% | 21.8% | 75% | 19.7% |
| C18:2% | 6.1% | 4.3% | 6.3% | 5.0% |
| C18:3% | 0.1% | 0.1% | 0.1% | 0% |

A significant difference in the fatty acid composition of the monoglycerides and diglycerides was observed between the commercial emulsifier and the self-emulsifying fat composition obtained in accordance with the method of the present invention. The fatty acid composition of both fractions (monoglyceride and diglyceride) is similar to the one of the self-emulsifying fat composition.

### Example 2

A cake margarine was prepared using the self-emulsifying fat composition of Example 1 as hardstock to blend with another vegetable oil, in this case, rapeseed oil (RP). The preparation comprised 50% self-emulsifying fat composition (w/w) and 50% rapeseed oil (w/w). No additional commercial or non-commercial emulsifiers were added. The reference composition was made with 50% of the same interesterified fat (w/w) without any modification and 50% rapeseed oil (w/w). 1% commercial emulsifier (w/w), Palsgaard® 1388 was added. The composition of both fat preparations was shown as following, w/w:

| | Self-emulsifying fat composition | Reference fat composition with commercial emulsifier (Palsgaard® 1388) |
|---|---|---|
| Monoglyceride | 0.6% | 0.5% |
| Diglyceride | 4% | 4% |
| Triglyceride | 95.4% | 95.5% |

Two margarines were made with respect to these two preparations for different applications.

### Example 3

The following recipe was used with both of the margarines of Example 2, respectively, to make cakes:

| | |
|---|---|
| Cake mix | 660g |
| Margarine | 368.5g |
| Egg | 334g |

450g batter of each samples was put into a mould respectively. The batter with self-emulsifying fat of the invention was firm and no fat lumps were observed. The batter with the reference fat containing commercial emulsifier was glossy and some fat lumps were observed in the batter.

The density of batter was measured as following:

| | Density (batter) (g/ml) |
|---|---|
| Sample 1 (made with reference fat containing commercial emulsifier) | 0.75 |
| Sample 2 (made with self-emulsifying fat) | 0.75 |

Then, the cake was baked for 70 minutes at 150°C.

The results of baking loss (%) and height (cm) were shown as following:

| | Baking loss (%) | Height (cm) |
|---|---|---|
| Sample 1 (made with reference fat containing commercial emulsifier) | 8.9 | 7.0 |
| Sample 2 (made with self-emulsifying fat) | 8.7 | 6.6 |

The cake products are shown in the following pictures:

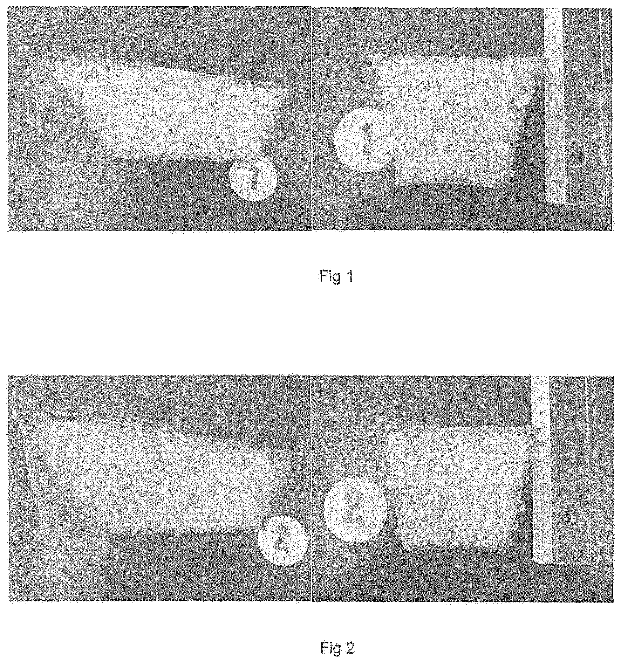

Figure 1 shows cake 1 made with the reference fat containing the commercial emulsifier.
Figure 2 shows cake 2 made with the self-emulsifying fat prepared in accordance with the method of the present invention.

The cake with reference fat containing the commercial emulsifier tasted tender but not too dry. The cake with self-emulsifying fat tasted very tender, similar to the reference. The mouth feel and taste are positive for both. Sample 1 had quite fine structure with some large air holes. Sample 2 was little less fine than Sample 1. Some air holes were larger in Sample 2. Both had a good cake smell and soft crumb.

The self-emulsifying fat prepared in accordance with the method of the present invention had the advantage that the batter contained fewer lumps, indicating reduced post-hardening and more work-softening.

Eating behaviour of the cake made with the self-emulsifying fat prepared in accordance with the method of the invention is superior to the cake made with the commercial emulsifier.

### Example 4

One portion of fat (10%, w/w) was removed from palm stearin (a non-interesterified fat). This removed portion was esterified with glycerin (ratio of one mole of glycerin to one mole of fat) in the presence of immobilized lipase originating from *Candida antarctica* B (Novozym® 435). When the reaction was completed, after approximatively 24 hours, this portion was filtered. The portion consisted of monoglycerides and diglycerides having the following composition, w/w:

| | |
|---|---|
| Monoglyceride | 30% |
| Diglyceride | 48% |
| Triglyceride | 22% |

This portion comprising monoglycerides and diglycerides was bleached and deodorized by low temperature (mild refining). The portion was reintroduced into the initial non-interesterified fat at the same percentage (10%, w/w) to obtain a self-emulsifying fat composition. This self-emulsifying fat composition consisted of monoglycerides and diglycerides from the same origin with a similar fatty acid composition having the following composition, w/w:

| | |
|---|---|
| Monoglyceride | 3% |
| Diglyceride | 6% |
| Triglyceride | 91% |

In order to compare the results, one reference composition was made with a commercial emulsifier Palsgaard® 1302 (available from Palsgaard A/S, Denmark). Palsgaard® 1302 has the following composition, w/w:

| | |
|---|---|
| Monoglyceride | 48% |
| Diglyceride | 42% |
| Triglyceride | 10% |

### Example 5

The self-emulsifying fat composition of Example 4 was used as a blend with palm oil to make a hardstock for a puff pastry margarine. The preparation contained 20% self-emulsifying fat composition (w/w) and 80% palm oil (w/w). No additional commercial or non-commercial emulsifiers are added. The reference composition was made with 20% the same non-interesterified fat (w/w) without any modification and 80% palm oil (w/w). 0.6% commercial emulsifier (w/w), Palsgaard® 1302 was added. The composition of both fat preparations was shown as following, w/w:

| | Self-emulsifying fat composition | Reference fat composition with commercial emulsifier (Palsgaard® 1302) |
|---|---|---|
| Monoglyceride | 0.6% | 0.4% |
| Diglyceride | 7.7% | 7% |
| Triglyceride | 91.7% | 92.6% |

Two puff pastry margarines were made with respect to these two preparations for application.

### Example 6

The following recipe (w/w) was used with both margarines respectively in puff pastry application:

| | |
|---|---|
| Flour | 41.15% |
| Soft margarine | 6.17% |
| Iced water | 21.4% |
| Salt | 0.41% |
| Puff pastry margarine | 30.86% |

Dough was made from the above ingredients except the puff pastry fat and left to rest for 10 minutes. The dough piece was incised to form a square piece in which the lightly prepared puff pastry fats of Example 5 were folded and laminated. 30 minutes rest was given to the dough after laminating and folding 3 and 4 times. This process was repeated once before 10 cm square pieces were cut out of the dough. The dough pieces were baked after another 30 minutes rest for 20 minutes at 190°C. During the lamination, the following observations were made:

| | Sample 1 (made with reference fat containing commercial emulsifier) | Sample 2 (made with self-emulsifying fat composition) |
|---|---|---|
| 1st lamination | Lumps visible | Some lumps, but plasticized |
| 2nd lamination | Quite some lumps and irregular dough | Much less lumps, good plasticized layer of margarine |
| 3rd lamination and cutting out | Crumbly, ok for cutting out | Nice |

The results after baking are shown in the following:

| Sample | Shrinkage (mm) | Oven lift (mm) | Puffing 3 pieces | Structure | Baking regularity |
|---|---|---|---|---|---|
| Sample 1 (made with reference fat containing commercial emulsifier) | 87.6mm / 92.3mm | 53.0mm | 170mm | Very fine, no banks | Somewhat wild |
| Sample 2 (made with self-emulsifying fat composition) | 84.9mm / 94.2mm | 52.3mm | 173mm | Very fine, no banks | More regular |

The products are shown in the following pictures:

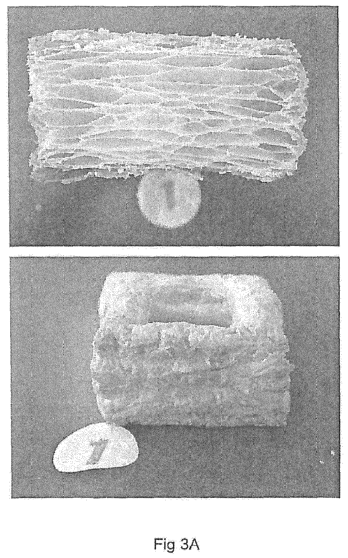

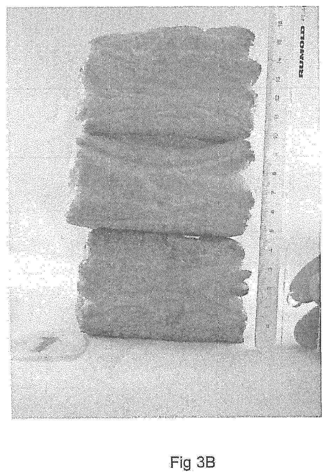

Figures 3A and 3B show pastry 1 made with the reference fat containing the commercial emulsifier.

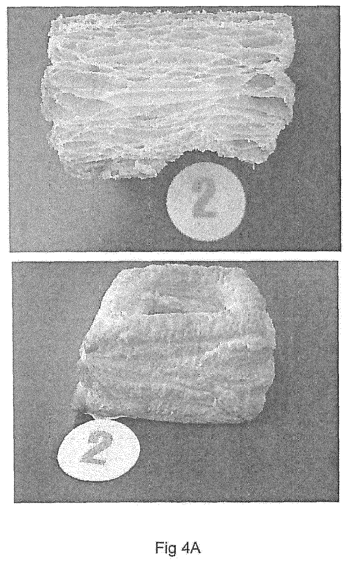

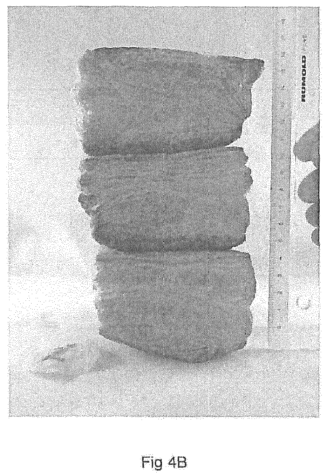

Figure 4 shows pastry 2 made with the self-emulsifying fat prepared in accordance with the method of the invention.

Both pastries tasted very nice and crispy.

The self-emulsifying fat prepared in accordance with the method of the invention provided a plastic margarine with superior laminating behaviour compared to the reference sample. The puff pastry produced using the self-emulsifying fat composition prepared in accordance with the method of the invention showed comparable puff and less shrink than the reference fat containing the commercial emulsifier.

## Claims

1. Method of preparing a self-emulsifying fat composition, comprising the steps of:
a) providing a fat composition comprising at least 95% by weight triglycerides;
b) separating a portion from the fat composition, wherein the portion represents from 0.5 to 10 % by weight of the fat composition;
c) reacting the separated portion with glycerol to obtain a reacted portion comprising monoglycerides (MG) and diglycerides (DG), wherein the weight of the fatty acids that are present in the fat composition in an amount greater than 5% by weight of the composition will vary in the reacted portion by 50% or less; and
d) reintroducing at least part of the reacted portion into the fat composition to obtain a self-emulsifying fat composition comprising from 0.5 to 10% by weight MG and from 2 to 15% by weight DG.

2. Method according to claim 1, wherein the portion represents from 0.5 to 5 % by weight of the fat composition.

3. Method according to claim 1 or 2, wherein after step c) the MG and DG combined amount to at least 25 % by weight of the reacted portion.

4. Method according to claim 3, wherein after step c) the MG and DG combined amount to at least 50 % by weight of the reacted portion.

5. Method according to any one of the preceding claims, wherein after step c) and prior to step d), the reacted portion is subjected to refining.

6. Method according to any one of the preceding claims, wherein the self-emulsifying fat composition has a weight ratio of DG to MG of at least 4:1.

7. Method according to claim 6, wherein the self-emulsifying fat composition has a weight ratio of DG to MG of from 4:1 to 10:1.

8. Method according to any one of the preceding claims, wherein prior to step d) the amounts of MG and DG in the reacted portion and the amounts of MG and DG in the fat composition are determined; and
wherein the amount of the reacted portion to be reintroduced into the fat composition is adjusted based on the determined amounts to obtain the predetermined amounts of MG and DG in the self-emulsifying fat composition.

9. Method according to any one of the preceding claims, wherein the amount of MG and DG combined in the self-emulsifying fat composition is from 2.5 to 20 % by weight.

10. Method according to claim 9, wherein the amount of MG and DG combined in the self-emulsifying fat composition is from 2.5 % to 10 % by weight.

11. Method according to any one of the preceding claims, wherein the amount of MG in the self-emulsifying fat composition is 0.5 to 4 % by weight.

12. Method according to claim 11, wherein the amount of MG in the self-emulsifying fat composition is from 0.5 to 2% by weight.

13. Method according to any one of the preceding claims, wherein the amount of DG in the self-emulsifying fat composition is from 2 to 10 % by weight.

14. Method according to claim 13, wherein the amount of DG in the self-emulsifying fat composition is from 5 to 8 % by weight.

15. Method according to any one of the preceding claims, wherein no additional emulsifiers are added.

## Patentansprüche

1. Verfahren zum Herstellen einer selbstemulgierenden Fettzusammensetzung, das die folgenden Schritte umfasst:
a) Bereitstellen einer Fettzusammensetzung, die wenigstens 95 Gew.-% Triglyceride umfasst;
b) Trennen eines Anteils von der Fettzusammensetzung, wobei der Anteil von 0,5 bis 10 Gew.-% der Fettzusammensetzung darstellt;
c) Umsetzen des getrennten Anteils mit Glycerin, um einen umgesetzten Anteil zu erhalten, der Monoglyceride (MG) und Diglyceride (DG) umfasst, wobei das Gewicht der Fettsäuren, die in der Fettzusammensetzung in einem Betrag über 5 Gew.-% der Zusammensetzung vorhanden sind, in dem umgesetzten Anteil um höchstens 50 % variieren wird; und
d) Wiedereinführen wenigstens eines Teils des umgesetzten Anteils in die Fettzusammensetzung, um eine selbstemulgierende Fettzusammensetzung zu erhalten, die von 0,5 bis 10 Gew.-% MG und von 2 bis 15 Gew.-% DG umfasst.

2. Verfahren nach Anspruch 1, wobei der Anteil von 0,5 bis 5 Gew.-% der Fettzusammensetzung darstellt.

3. Verfahren nach Anspruch 1 oder 2, wobei nach Schritt c) die MG und die DG gemeinsam wenigstens 25 Gew.-% des umgesetzten Anteils betragen.

4. Verfahren nach Anspruch 3, wobei nach Schritt c) die MG und die DG gemeinsam wenigstens 50 Gew.-% des umgesetzten Anteils betragen.

5. Verfahren nach einem der vorhergehenden Ansprüche, wobei nach Schritt c) und vor Schritt d) der umgesetzte Anteil einer Raffination unterzogen wird.

6. Verfahren nach einem der vorhergehenden Ansprüche, wobei die selbstemulgierende Fettzusammensetzung ein Gewichtsverhältnis von DG zu MG von wenigstens 4 : 1 aufweist.

7. Verfahren nach Anspruch 6, wobei die selbstemulgierende Fettzusammensetzung ein Gewichtsverhältnis von DG zu MG von 4 : 1 bis 10 : 1 aufweist.

8. Verfahren nach einem der vorhergehenden Ansprüche, wobei vor Schritt d) die Beträge an MG und DG in dem umgesetzten Anteil und die Beträge an MG und DG in der Fettzusammensetzung bestimmt werden; und
wobei der Betrag des umgesetzten Anteils, der in die Fettzusammensetzung wiedereingeführt werden soll, basierend auf den bestimmten Beträgen angepasst wird, um die zuvor bestimmten Beträge an MG und DG in der selbstemulgierenden Fettzusammensetzung zu erhalten.

9. Verfahren nach einem der vorhergehenden Ansprüche, wobei der Betrag an MG und DG gemeinsam in der selbstemulgierenden Fettzusammensetzung von 2,5 bis 20 Gew.-% ist.

10. Verfahren nach Anspruch 9, wobei der Betrag an MG und DG gemeinsam in der selbstemulgierenden Fettzusammensetzung 2,5 bis 10 Gew.-% ist.

11. Verfahren nach einem der vorhergehenden Ansprüche, wobei der Betrag an MG in der selbstemulgierenden Fettzusammensetzung 0,5 bis 4 Gew.-% ist.

12. Verfahren nach Anspruch 11, wobei der Betrag an MG in der selbstemulgierenden Fettzusammensetzung 0,5 bis 2 Gew.-% ist.

13. Verfahren nach einem der vorhergehenden Ansprüche, wobei der Betrag an DG in der selbstemulgierenden Fettzusammensetzung von 2 bis 10 Gew.-% ist.

14. Verfahren nach Anspruch 13, wobei der Betrag an DG in der selbstemulgierenden Fettzusammensetzung 5 bis 8 Gew.-% ist.

15. Verfahren nach einem der vorhergehenden Ansprüche, wobei keine zusätzlichen Emulgatoren hinzugefügt werden.

## Revendications

1. Procédé de préparation d'une composition de graisse auto-émulsifiante, comprenant les étapes consistant à :
a) fournir une composition de graisse comprenant au moins 95 % en poids de triglycérides ;
b) séparer une partie de la composition de graisse, la partie représentant de 0,5 à 10 % en poids de la composition de graisse ;
c) faire réagir la partie séparée avec du glycérol pour obtenir une partie ayant réagi comprenant des monoglycérides (MG) et des diglycérides (DG), le poids des acides gras présents dans la composition de graisse en une quantité supérieure à 5 % en poids de la composition pouvant varier dans la partie ayant réagi de 50 % ou moins ; et
d) réintroduire au moins une partie de la partie ayant réagi dans la composition de graisse pour obtenir une composition de graisse auto-émulsifiante comprenant de 0,5 à 10 % en poids de MG et de 2 à 15 % en poids de DG.

2. Procédé selon la revendication 1, la partie représentant de 0,5 à 5 % en poids de la composition de graisse.

3. Procédé selon la revendication 1 ou 2, après l'étape c), la MG et la DG combinées représentent au moins 25 % en poids de la partie ayant réagi.

4. Procédé selon la revendication 3, après l'étape c), la MG et la DG combinées représentant au moins 50 % en poids de la partie ayant réagi.

5. Procédé selon l'une quelconque des revendications précédentes, après l'étape c) et avant l'étape d), la partie ayant réagi étant soumise à un raffinage.

6. Procédé selon l'une quelconque des revendications précédentes, la composition de graisse auto-émulsifiante ayant un rapport en poids de DG à MG d'au moins 4:1.

7. Procédé selon la revendication 6, la composition de graisse auto-émulsifiante ayant un rapport en poids de DG à MG de 4:1 à 10:1.

8. Procédé selon l'une quelconque des revendications précédentes, avant l'étape d), les quantités de MG et de DG dans la partie ayant réagi et les quantités de MG et de DG dans la composition de graisse étant déterminées ; et
la quantité de la partie ayant réagi à réintroduire dans la composition de graisse étant ajustée sur la base des quantités déterminées pour obtenir les quantités prédéterminées de MG et de DG dans la composition de graisse auto-émulsifiante.

9. Procédé selon l'une quelconque des revendications précédentes, la quantité de MG et de DG combinée dans la composition de graisse auto-émulsifiante étant de 2,5 à 20 % en poids.

10. Procédé selon la revendication 9, la quantité de MG et de DG combinée dans la composition de graisse auto-émulsifiante étant de 2,5 % à 10 % en poids.

11. Procédé selon l'une quelconque des revendications précédentes, la quantité de MG dans la composition de graisse auto-émulsifiante étant de 0,5 à 4 % en poids.

12. Procédé selon la revendication 11, la quantité de MG dans la composition de graisse auto-émulsifiante étant de 0,5 à 2 % en poids.

13. Procédé selon l'une quelconque des revendications précédentes, la quantité de DG dans la composition de graisse auto-émulsifiante étant de 2 à 10 % en poids.

14. Procédé selon la revendication 13, la quantité de DG dans la composition de graisse auto-émulsifiante étant de 5 à 8 % en poids.

15. Procédé selon l'une quelconque des revendications précédentes, aucun émulsifiant supplémentaire n'étant ajouté.
